(19) Europäisches Patentamt
European Patent Office
Office européen des brevets

(11) **EP 2 828 491 B1**

(12) **EUROPÄISCHE PATENTSCHRIFT**

(45) Veröffentlichungstag und Bekanntmachung des Hinweises auf die Patenterteilung:
**20.07.2016  Patentblatt 2016/29**

(21) Anmeldenummer: **13713383.1**

(22) Anmeldetag: **19.03.2013**

(51) Int Cl.:
*F02C 9/32* ⁽²⁰⁰⁶·⁰¹⁾        *G01M 15/14* ⁽²⁰⁰⁶·⁰¹⁾
*F01D 21/14* ⁽²⁰⁰⁶·⁰¹⁾      *F02C 9/46* ⁽²⁰⁰⁶·⁰¹⁾

(86) Internationale Anmeldenummer:
**PCT/EP2013/055707**

(87) Internationale Veröffentlichungsnummer:
**WO 2013/139797 (26.09.2013 Gazette 2013/39)**

(54) **GASTURBINE MIT BRENNSTOFFÜBERWACHUNG**

GAS TURBINE WITH FUEL MONITORING

TURBINE À GAZ AVEC CONTRÔLE DE CARBURANT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2012  EP 12160259**

(43) Veröffentlichungstag der Anmeldung:
**28.01.2015  Patentblatt 2015/05**

(73) Patentinhaber: **ALSTOM Technology Ltd**
**5400 Baden (CH)**

(72) Erfinder:
• **ZHANG, Mengbin**
  **CH-8112 Otelfingen (CH)**
• **LIEDTKE, Klaus-Dieter**
  **CH-5304 Endingen (CH)**
• **GRANADOS GOMEZ, Wenceslao**
  **Moseley, Virginia 23120 (US)**

(74) Vertreter: **Bernotti, Andrea et al**
**Studio Torta S.p.A.**
**Via Viotti, 9**
**10121 Torino (IT)**

(56) Entgegenhaltungen:
**US-A1- 2011 282 501     US-B1- 6 761 629**

**Beschreibung**

TECHNISCHES GEBIET

Die vorliegende Erfindung bezieht sich auf das Gebiet der Kraftwerkstechnik. Sie betrifft ein Verfahren zum Detektieren von Brennstoffleckagen in einer Gasturbinenanlage sowie eine Gasturbinenanlage zur Durchführung eines derartigen Verfahrens.

STAND DER TECHNIK

Trotz aller Vorsichtsmassnahmen bei der Auslegung, dem Bau und Betrieb von Gasturbinen bürgen Brennstoffleckagen von flüssigem oder gasförmigem Brennstoff bei Gasturbinen ein grosses Risiko. Werden sie nicht rechtzeitig erkannt, so können grössere Mengen Brennstoff unkontrolliert austreten, sich entzünden und mit katastrophalen Folgen verbrennen oder explodieren.

Um Brennstoffleckage zu erkennen sind Öl-detektierende Kabel, Öldetektormatrizen und Gassensoren oder Gasschnüfflern bekannt. Schwierig ist insbesondere eine flächendeckende Überwachung eines verzweigten Brennstoffverteilsystems zwischen dem Brennstoffregelventil und der Brennstoffeinleitung in die einzelnen Brenner einer Gasturbine. Mit herkömmlichen Methoden ist diese sehr aufwendig und je nach Austrittsrichtung des Leckagestroms kann eine Leckage erst mit Verzögerung detektiert werden.

Anstelle einer Gasdetektion in unmittelbarer Nähe der Gasleitungen wurde in der US 6761629 vorgeschlagen, die Gaskonzentration am Austritt einer gelüfteten Abdeckhaube für eine Gasturbine zu messen. Dabei wird Abhängig von der Durchflussmenge der Lüftung ein Schwellwert für die Konzentration eines Leckagegases bestimmt und bei Überschreitung des Schwellwertes ein Alarm generiert. Auch in diesem Verfahren kann eine Leckage erst mit Verzögerung detektiert werden.

DARSTELLUNG DER ERFINDUNG

Ein Ziel der vorliegenden Offenbarung ist es, ein Verfahren zur schnellen, zuverlässigen Detektion von Brennstoffleckagen im Brennstoffverteilsystem zwischen einem Brennstoffregelventil und mindestens einem Brenner einer Gasturbine anzugeben. Weiter ist ein Gasturbinenkraftwerk, das zur Ausführung des Verfahrens geeignet ist, Gegenstand der Offenbarung.

Das offenbarte Verfahren zum Detektieren einer Brennstoffleckage während des Betriebs der Gasturbine im Brennstoffverteilsystem zwischen dem Brennstoffregelventil und dem mindestens einem Brenner der Gasturbine zeichnet sich dadurch aus, dass der Brennstoffverbrauch in Abhängigkeit von der Leistung der Gasturbine angenähert wird, die dem Brennstoffverteilsystem zugeführte Brennstoffmenge bestimmt wird, und der Leckagestrom aus der Differenz zwischen der dem Brennstoffverteilsystem zugeführten Brennstoffmenge und dem Brennstoffverbrauch ermittelt wird.

Nach einer Ausführungsform des Verfahrens wird der Brennstoffverbrauch als Funktion von Gasturbinenleistung, dem Wirkungsgrad der Gasturbine und dem Heizwert des Brennstoffs gebildet.

Nach einer weiter Ausführungsform des Verfahrens wird der Brennstoffverbrauch der Gasturbine durch die Summe aus einem Leerlaufbrennstoffmassenstrom und einem Leistungsbrennstoffmassenstrom berechnet, wobei der Leistungsbrennstoffmassenstrom als Funktion von Gasturbinenleistung, einem Leistungswirkungsgrad der Gasturbine und dem Heizwert des Brennstoffs gebildet wird. Dabei ist der Leerlaufbrennstoffmassenstrom der Brennstoffmassenstrom, den die Gasturbine bei Leerlauf verbraucht.

Weiter kann die Leistung der Gasturbine bei Lastbetrieb durch die Generatorleistung angenähert werden. Damit kann bei Lastbetrieb der Leistungsbrennstoffmassenstrom als Funktion der Generatorleistung gebildet werden.

Nach einer weiteren Ausführung des Verfahrens für instationären Betrieb, bei dem sich die Drehzahl der Gasturbine ändert, wird die Beschleunigung des Wellenstranges der Gasturbine gemessen wird und die Leistung der Gasturbine aus der Summe von Generatorleistung und der Leistung zur Beschleunigung des Wellenstranges gebildet. Eine Drehzahländerung des Wellenstranges der Gasturbine findet beispielsweise beim Anfahren der Gasturbine sowie bei Änderungen der Netzfrequenz statt. Während des Anfahrens ist die Generatorleistung typischerweise Null oder negativ, d.h. der Generator ist noch nicht synchronisiert und es wird keine elektrische Leistung abgegeben oder der Generator wird als Motor zum Andrehen der Gasturbine betrieben.

Sowohl die Berechnung des Brennstoffverbrauchs der Gasturbine als auch die Messung oder Berechnung der zugeführten Brennstoffmenge sind typischerweise Annäherung der tatsächlichen Brennstoffströme. Die Messung der zugeführten Brennstoffmenge ist mit Messfehlern behaftet und die Berechnung des Brennstoffverbrauchs beispielsweise über einen Wirkungsgrad ist ungenau und kann nicht alle Betriebsparameter und z.B. Alterungseinflüsse genau berücksichtigen. Um eine falsche Leckagemeldung zu vermeiden wird nach einer Ausführung aus dem berechneten Leckagestrom das zeitliche Inkrement gebildet und eine Leckagemeldung in Abhängigkeit von dem Inkrement ausgegeben.

In dieser Ausführung wird das zeitliche Inkrement der Leckage berechnet und eine Leckage erst als erkannt gewertet, wenn das berechnete Inkrement einen Schwellenwert überschreitet. Plötzlich auftretende Leckagen können mit dieser Ausführung zuverlässig erkannt werden. Schleichende kleine Leckageströme müssen auf herkömmliche Weise, z.B. über Sensoren oder Gaskonzentrationsmessungen detektiert werden.

Nach einer Ausführung des Verfahren wird das zeitliche Inkrement der Leckage nach der Gleichung:

$$m_{leak\_inc} = m_{leak}\left(1 - \frac{1}{\tau}\int e^{-\frac{t}{\tau}}dt\right) = m_{leak}\,e^{-\frac{t}{\tau}} \qquad (1)$$

berechnet wird, wobei das Inkrement über die Zeit t mit einer Integrationsdauer $\tau$ berechnet wird.

Um Mess- und Nährungsfehler zu kompensieren, wird nach einer alternativen Ausführung des Verfahrens eine Leckage erst als erkannt gewertet, wenn der berechnete Leckagestrom einen Schwellenwert überschreitet.

Die zugeführte Brennstoffmenge kann mit einem Messgerät gemessen werden. Nach einer vorteilhaften Ausführung des Verfahrens wird die zugeführte Brennstoffmenge als Funktion der Stellung des Brennstoffregelventils, der Brennstoffregelventilcharakteristik sowie des Brennstoffdruckes am Regelventil berechnet. Für Brenngase wird weiter die Brennstofftemperatur gemessen und bei der Berechnung berücksichtigt.

Anstelle der gemessen zugeführten Brennstoffmenge kann nach einer weiteren Ausführung des Verfahrens eine Sollbrennstoffmenge (auch als Commanded Mass Flow) des Reglers, mit der das Brennstoffregelventil geregelt wird, als zugeführte Brennstoffmenge verwendet werden.

Um einen zuverlässigen Betrieb der Gasturbine während einer schnellen Änderung der Betriebsbedingungen zu gewährleisten, wird nach einer Ausführung des Verfahrens die Detektion der Brennstoffleckage während einer schnellen Änderung der Betriebsbedingungen der Gasturbine deaktiviert. Damit wird verhindert, dass erhöhte Messfehler aufgrund der transienten Vorgänge zu einem falschen Alarm führen. Alternativ kann auch die Schwelle des Inkrements oder des Leckagestroms zur Detektierung einer Brennstoffleckage während einer schnellen Änderung der Betriebsbedingungen erhöht werden.

Insbesondere wird nach einer Ausführung des Verfahrens die Schwelle des Inkrements oder des Leckagestroms zur Detektierung einer Brennstoffleckage während eines Lastabwurfs erhöht oder die Detektierung deaktiviert.

Nach einer weiteren Ausführung des Verfahrens wird die Schwelle des Inkrements oder des Leckagestroms zur Detektierung einer Brennstoffleckage während eines Betriebsmodus zur Frequenzunterstützung deaktiviert.

Um die Gasturbine vor den möglichen Folgen einer Brennstoffleckage zu schützen, wird nach einer Ausführung des Verfahrens ein Tripventil der Brennstoffzürührung geschlossen, sobald eine Brennstoffleckage detektiert wird.

Das Verfahren ist sowohl für den Betrieb mit einem gasförmigen als auch für den Betrieb mit einem flüssigen Brennstoff durchführbar. Nach einer Ausführung wird das Verfahren im Ölbetrieb angewandt.

Neben dem Verfahren ist eine Kraftwerksanlage zur Durchführung des Verfahrens Gegenstand der Offenbarung. Eine derartige Kraftwerksanlage umfasst eine Gasturbine, einen Regler, ein Brennstoffverteilsystem, dass zwischen einem Brennstoffregelventil und mindestens einem Brenner angeordnet ist und einen von der Gasturbine angetriebenen Generator. Um das Verfahren zum Detektieren einer Brennstoffleckage durchführen zu können ist der Regler so konfiguriert, dass er den Brennstoffverbrauch in Abhängigkeit von der Leistung der Gasturbine annähern kann, die zugeführte Brennstoffmenge bestimmten kann, und den Leckagestrom aus Differenz zwischen der zugeführten Brennstoffmenge und dem Brennstoffverbrauch oder Brennstoffsollmenge und dem Brennstoffverbrauch ermitteln kann.

KURZE ERLÄUTERUNG DER FIGUREN

Die Erfindung soll nachfolgend für Ausführungsbeispiele anhand der Zeichnung näher erläutert werden. Es zeigen

Fig. 1    ein stark vereinfachtes Schaltbild einer Kraftwerksanlage mit Gasturbine, einem Regler und einem Brennstoffverteilsystem;

Fig. 2    einen stark vereinfachten Ausschnitt aus dem Brennstoffverteilsystem zwischen dem Brennstoffregelventil und den Brennern einer Gasturbine;

Fig. 3    eine Ablaufskizze der Inkrementberechnung.

WEGE ZUR AUSFÜHRUNG DER ERFINDUNG

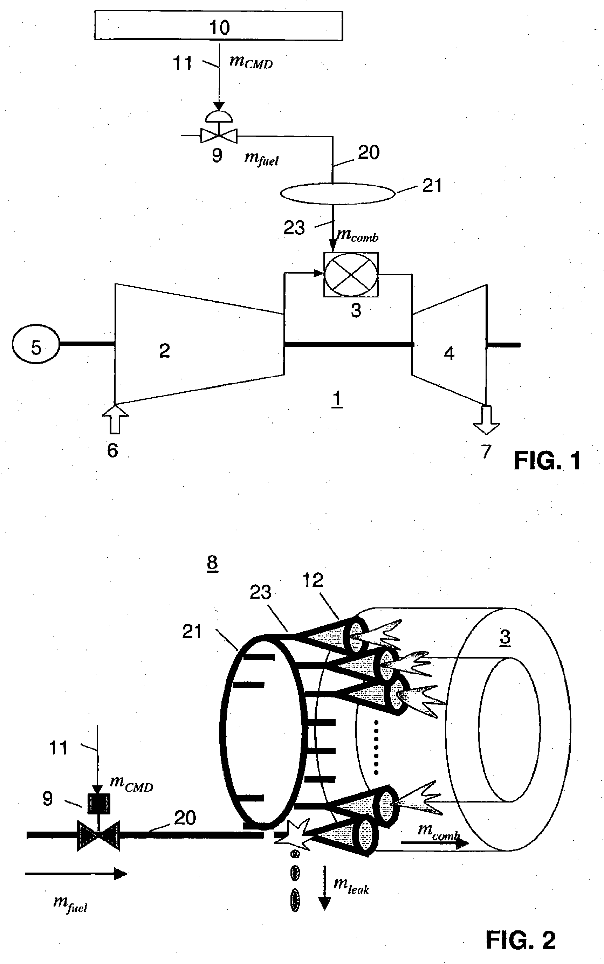

Fig. 1 zeigt in schematischer Darstellung die wesentlichen Elemente eines erfindungsgemässen Gasturbinenkraftwerks. Die Gasturbine 1 umfasst einen Verdichter 2 (Kompressor), in dem Ansaugluft 6 zu Verbrennungsluft verdichtet wird. Diese wird einer Brennkammer 3 zugeführt und dort mit dem zugeführten Brennstoff $m_{comb}$ verbrannt. Anschliessend werden die heissen Verbrennungsgase in einer Turbine 4 entspannt. Die in der Turbine 4 erzeugte Nutzenergie wird dann zum Beispiel mit einem auf der gleichen Welle angeordneten ersten Generator 5 in elektrische Energie umgewandelt.

Die aus der Turbine 4 austretenden heissen Abgase 7 werden typischerweise zur optimalen Nutzung der darin noch enthaltenen Energie in einem Abhitzedampferzeuger (Heat Recovery Steam Generator, HRSG) dazu verwendet Dampf für einen Wasser- Dampfkreislauf zu erzeugen (nicht dargestellt).

Der Betrieb der Gasturbine 1 wird von einem Regler 10 geregelt. Insbesondere wird die zugeführte Brennstoffmenge $m_{fuel}$ mit Hilfe eines Regelventils 9, dem über eine Signalleitung 11 eine Sollbrennstoffmenge $m_{CMD}$ (command) übertragen wird, geregelt. Der Brennstoff wird über ein Brennstoffverteilsystem, dass in dem gezeigten Beispiel eine Brennstoffleitung 20, eine Brennstoffringleitung 21 und Einzelleitungen 23 zu den Brennern der Brennkammer 3 umfasst. Die Summe der durch die Einzelleitungen 23 in die Brennkammer 3 eingeleitete Brennstoffmenge ist gleich dem Brennstoffverbrauch $m_{comb}$ der Gasturbine. Im stationären, leckagefreien Betrieb ist der Brennstoffverbrauch $m_{comb}$ gleich der durch das Regelventil 9 zugeführte Brennstoffmenge $m_{fuel}$. Weitere Messleitung sowie weitere Signalleitung zum Regler 10, wie z.B. zur Übertragung der Ist- Position des Brennstoffregelventils 9, sind nicht dargestellt.

Die Fig. 2 zeigt einen stark vereinfachten Ausschnitt aus dem Brennstoffverteilsystem zwischen dem Brennstoffregelventil 9 und den Brennern 12 einer Gasturbine 1. Die Brenner 12 münden die Brennkammer 3, die in dem Beispiel als Ringbrennkammer dargestellt ist. Die Brenner 12 werden von dem Brennstoffregelventil 9 über ein Brennstoffverteilsystem, umfassend eine Brennstoffleitung 20, eine Brennstoffringleitung 21 und Einzelleitungen 23, mit Brennstoff versorgt. Dabei geht ein Teil der zugeführte Brennstoffmenge $m_{fuel}$ als Brennstoffleckage $m_{leak}$ verloren, so dass der tatsächliche Brennstoffverbrauch $m_{comb}$ der Brennkammer 3 kleiner als die zugeführte Brennstoffmenge $m_{fuel}$ ist.

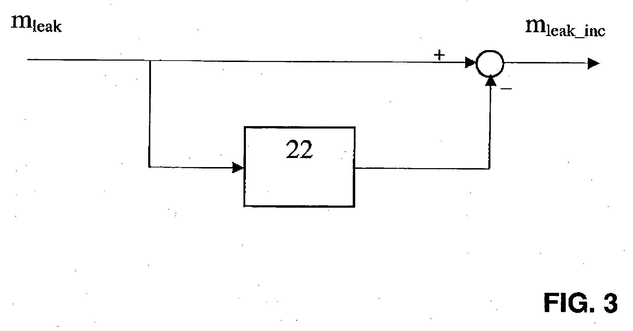

Fig. 3 zeigt eine beispielhafte Ablaufskizze der Inkrementberechnung, wobei das Inkrement der Brennstoffleckage $m_{leak\_inc}$ aus der Differenz von ermittelter Brennstoffleckage $m_{leak}$ und dem Wert eines Tiefpasses 22 erster Ordnung der Brennstoffleckage gebildet wird.

Der Brennstoffverbrauch $m_{comb}$ der Gasturbine 1 ist der Quotient aus Wärmezufuhr Q durch Verbrennung und dem unteren Heizwert (LHV) des Brennstoffes:

$$\dot{m}_{comb} = Q/LHV , \qquad\qquad (2)$$

wobei die Wärmezufuhr Q gleich dem Quotienten aus gesamter abgegebener Leistung und Wirkungsgrad η der Gasturbine ist. Mit der abgegeben Leistung als Summe aus Generatorleistung $P_{geno}$ (der Generatorwirkungsgrad ist zur Vereinfachung gleich eins gesetzt) und Beschleunigungsleistung der Gasturbine ergibt sich:

$$Q = (P_{geno} + J\omega\dot{\omega})/\eta \qquad\qquad (3)$$

wobei die Beschleunigungsleistung der Gasturbine das Produkt aus Trägheitsmoment J, der Winkelgeschwindigkeit co und der Winkelbeschleunigung $\dot{\omega}$ ist.

Für stationären Betrieb ist die Winkelbeschleunigung gleich null und damit gilt:

$$Q = P_{geno}/\eta , \qquad\qquad (4),$$

wobei der Wirkungsgrad η für verschiedene Betriebszustände bekannt ist und als Funktion der wichtigsten Betriebsparameter, wie Last, Verdichtereintrittstemperatur, Stellung von Verdichterleitschaufeln, Eintrittsdruck usw. bestimmt werden kann oder in Tabellen abgelegt werden kann.

Praktisch hat sich gezeigt, dass die Wärmezufuhr Q in eine Wärmezufuhr für den Leerlaufbetrieb $Q_{idel}$ plus eine Wärmezufuhr zur Leistungserzeugung $Q_{load}$ aufgeteilt werden kann:

$$Q = Q_{idle} + Q_{load} , \qquad\qquad (5),$$

wobei die Wärmezufuhr für Last $Q_{load}$ aus der Generatorleistung und einem Lastwirkungsgrad $\eta_{load}$ bestimmt wird:

$$Q_{load} = P_{geno}/\eta_{load} \, . \qquad\qquad (6)$$

Da die bei der vollständigen Verbrennung frei gesetzte Wärme das Produkt aus unterem Heizwert und Brennstoffmassenstrom ist, ergibt sich aus 5 und 6:

$$m_{comb} = P_{geno}/(\eta_{load} * LHV) + m_{idle} \quad , \qquad\qquad (7),$$

wobei $m_{idle}$, der zur Freisetzung der Wärmezufuhr bei Leerlaufbetrieb $Q_{idle}$ erforderliche Brennstoffmassenstrom ist. Die Aufteilung in Leerlauf und Leistungsanteil erlaubt es den Brennstoffmassenstrom $m_{comb}$ mit Hilfe eines konstanten Leerlaufmassenstroms $m_{idle}$ und eines konstanten Leistungswirkungsgrads $\eta_{load}$ anzunähern.

Die Brennstoffleckage $m_{leak}$ im Brennstoffverteilsystem ist gleich der Differenz aus zugeführtem und abgeführten Brennstoffmassenstrom, d.h. aus zugeführter Brennstoffmenge $m_{fuel}$ und dem Brennstoffverbrauch $m_{comb}$ in der Brennkammer 3:

$$m_{leak} = m_{fuel} - m_{comb} \qquad\qquad (8)$$

Mit Gleichung 7, 8 und einer Annährung der zugeführten Brennstoffmenge $m_{fuel}$ durch den Sollbrennstoffmassenstrom $m_{CMD}$, ergibt sich für den Leckagestrom $m_{leak}$ die einfache Gleichung:

$$m_{leak} = m_{cmd} - P_{geno}/(\eta_{load} LHV) + m_{idle} \qquad\qquad (9)$$

Da alle zur Berechnung des Leckagestroms $m_{leak}$ nach Gleichung 9 erforderlichen Grössen im stationären Betrieb einer Gasturbine bekannt sind, kann damit in einem Regler 10 der Leckagestrom $m_{leak}$ berechnet werden.

Die möglichen Ausführungen der Erfindung sind nicht auf die hier dargestellten Beispiele beschränkt. Anhand der Beispiele eröffnen sich dem Fachmann eine Vielzahl von Möglichkeiten äquivalente Schaltungen und Verfahren zu realisieren.

Weiter ist beim Betrieb mit Gas als Brennstoff das Volumen des Brennstoffverteilsystems zu berücksichtigen. Das Brennstoffverteilsystem kann als Brenngasspeicher wirken und zu einer deutlichen Verzögerung führen. Ein Druckaufbau oder Druckabbau in dem System ist für eine exakte Leckageberechnung zu berücksichtigen. Mit der Druckänderung des Brenngases im Brennstoffverteilsystem, dem Volumen des Brennstoffverteilsystems und der Temperatur des Brenngases im Brennstoffverteilsystem kann die Differenz aus dem Brennstoffverbrauch $m_{comb}$ in der Brennkammer 3 und der dem Brennstoffverteilsystem zugeführten Brennstoffmenge $m_{fuel}$, die auf den Speichereffekt des Brennstoffverteilsystems zurückzuführen ist, berechnet werden. Ein effektiver Leckagestrom ist die um den Speichereffekt reduzierte Differenz aus dem Brennstoffverbrauch $m_{comb}$ in der Brennkammer 3 und der zugeführten Brennstoffmenge $m_{fuel}$.

Weiter ist die Anwendung nicht auf Gasturbinen mit einfacher Brennkammer, wie sie in Fig. 1 gezeigt ist, beschränkt, sondern kann ohne Einschränkung auch für Gasturbinen mit sequentieller Verbrennung, wie sie beispielsweise aus der EP0718470 bekannt sind, anwendbar.

BEZUGSZEICHENLISTE

| 1 | Gasturbine |
| 2 | Verdichter |
| 3 | Brennkammer |
| 4 | Turbine |
| 5 | Generator |
| 6 | Ansaugluft |
| 7 | Abgas |
| 8 | Brennstoffverteilsystem |
| 9 | Brennstoffregelventil |

| 10 | Regler |
| 11 | Signalleitung |
| 12 | Brenner |
| 20 | Brennstoffleitung |
| 21 | Brennstoffringleitung. |
| 22 | Tiefpassfilter |
| 23 | Brennereinzelleitung |
| LHV | unterer Heizwert (Lower Heating Value) |
| $m_{fuel}$ | zugeführte Brennstoffmenge |
| $m_{CMD}$ | Sollbrennstoffmenge des Reglers |
| $m_{comb}$ | Brennstoffverbrauch |
| $m_{leak}$ | Brennstoffleckage |
| $m_{leak\_inc}$ | Inkrement der Brennstoffleckage |
| $P_{Geno}$ | Generatorleistung |
| Q | Wärmezufuhr plus eine $Q_{load}$ |
| Qidle | Wärmezufuhr für den Leerlaufbetrieb $Q_{idel}$ |
| Qload | Wärmezufuhr zur Leistungserzeugung |
| t | Zeit |
| η | Wirkungsgrad |
| $η_{load}$ | Lastwirkungsgrad |

## Patentansprüche

1. Verfahren zum Detektieren einer Brennstoffleckage während des Betriebs einer Gasturbine (1) in einem Brennstoffverteilsystem zwischen einem Brennstoffregelventil (9) und mindestens einem Brenner (12) der Gasturbine (1) **dadurch gekennzeichnet,**
**dass** ein Brennstoffverbrauch ($m_{comb}$) der Gasturbine (1) in Abhängigkeit von der mechanischen Leistung der Gasturbine (1) angenähert wird,
die dem Brennstoffverteilsystem zugeführte Brennstoffmenge ($m_{fuel}$) bestimmt wird,
und der Leckagestrom ($m_{leak}$) aus der Differenz zwischen der zugeführten Brennstoffmenge ($m_{fuel}$) und dem Brennstoffverbrauch ($m_{comb}$) ermittelt wird.

2. Verfahren zum Detektieren einer Brennstoffleckage nach Anspruch 1,

**dadurch gekennzeichnet, dass** der Brennstoffverbrauch ($m_{comb}$) als Funktion von Gasturbinenleistung, dem Wirkungsgrad der Gasturbine (η) und dem Heizwert des Brennstoffs (LHV) gebildet wird,

3. Verfahren zum Detektieren einer Brennstoffleckage nach Anspruch 1, **dadurch gekennzeichnet,**
**dass** der Brennstoffverbrauch ($m_{comb}$) der Gasturbine (1) durch die Summe aus einem Leerlaufbrennstoffmassenstrom ($m_{idle}$) und einem Leistungsbrennstoffmassenstrom ($m_{load}$) berechnet wird, wobei der Leistungsbrennstoffmassenstrom ($m_{load}$) als Funktion von Gasturbinenleistung, einem Leistungswirkungsgrad ($η_{load}$) der Gasturbine und dem Heizwert des Brennstoffs (LHV) gebildet wird,

4. Verfahren zum Detektieren einer Brennstoffleckage nach einem der Ansprüche 1 bis 3, **dadurch gekennzeichnet,**
**dass** die Leistung der Gasturbine (1) bei stationärem Lastbetrieb durch die durch die Generatorleistung ($P_{geno}$) angenähert wird.

5. Verfahren zum Detektieren einer Brennstoffleckage nach einem der Ansprüche 1 bis 3, **dadurch gekennzeichnet,**
**dass** bei Anfahren der Gasturbine sowie bei Änderungen der Netzfrequenz die Beschleunigung ($\dot{\omega}$) des Wellen-stranges der Gasturbine (1) gemessen wird und die Leistung der Gasturbine aus der Summe von Generatorleistung ($P_{geno}$) und der Leistung zur Beschleunigung des Wellenstranges gebildet wird.

6. Verfahren zum Detektieren einer Brennstoffleckage nach einem der Ansprüche 1 bis 5, **dadurch gekennzeichnet,**
**dass** das zeitliche Inkrement der Leckage ($m_{leak\_inc}$) berechnet wird und eine Leckage erst dann als erkannt gewertet wird, wenn das berechnete Inkrement einen Schwellenwert überschreitet.

7. Verfahren zum Detektieren einer Brennstoffleckage nach Anspruch 6, **dadurch gekennzeichnet, dass** das zeitliche Inkrement der Leckage nach der Gleichung:

$$m_{leak\_inc} = m_{leak}\,(1 - \frac{1}{\tau}\int e^{-\frac{t}{\tau}}dt) = m_{leak}\,e^{-\frac{t}{\tau}}$$

berechnet wird, wobei $\tau$ die Integrationsdauer über der Zeit t der Inkrementberechnung ist.

8. Verfahren zum Detektieren einer Brennstoffleckage nach einem der Ansprüche 1 bis 5, **dadurch gekennzeichnet, dass** eine Leckage erst als erkannt gewertet wird, wenn der berechnete Leckagestrom ($m_{leak}$) einen Schwellenwert überschreitet.

9. Verfahren zum Detektieren einer Brennstoffleckage nach einem der Ansprüche 1 bis 8, **dadurch gekennzeichnet, dass** die zugeführte Brennstoffmenge ($m_{fuel}$) als Funktion der Stellung des Brennstoffregelventils, der Brennstoffregelventilcharakteristik sowie des Brennstoffdruekes am Regelventil berechnet wird.

10. Verfahren zum Detektieren einer Brennstoffleckage nach einem der Ansprüche 1 bis 8, **dadurch gekennzeichnet, dass** die Sollbrennstoffmenge ($m_{CMD}$) des Reglers als zugeführte Brennstoffmenge ($m_{fuel}$) verwendet wird.

11. Verfahren zum Detektieren einer Brennstoffleckage nach einem der Ansprüche 1 bis 9, **dadurch gekennzeichnet** die Detektion der Brennstoffleckage während einer schnellen Änderung der Betriebsbedingungen der Gasturbine (1) deaktiviert wird.

12. Verfahren zum Detektieren einer Brennstoffleckage nach Anspruch 11, **dadurch gekennzeichnet, dass** die Detektion der Brennstoffleckage während eines Lastabwurfs oder während eines Betriebsmodus zur Frequenzunterstützung deaktiviert ist.

13. Verfahren zum Detektieren einer Brennstoffleckage nach Anspruch 11,

   **dadurch gekennzeichnet, dass** die Schwelle des Inkrements des Leckagestroms ($m_{leak\_inc}$) oder die Schwelle des Leckagestroms zur Detektierung einer Brennstoffleckage durch den Brennstoffleckagestrom ($m_{leak}$) während eines Lastabwurfs oder während eines Betriebsmodus zur Frequenzunterstützung deaktiviert ist.

14. Verfahren zum Detektieren einer Brennstoffleckage nach einem der Ansprüche 1 bis 13, **dadurch gekennzeichnet, dass** ein Tripventil der Brennstoffzurührung geschlossen wird, sobald eine Brennstoffleckage detektiert wird.

15. Kraftwerksanlage umfassend eine Gasturbine (1), einen Regler (10), ein Brennstoffverteilsystem zwischen einem Brennstoffregelventil (9) und mindestens einem Brenner (12) und einen von der Gasturbine (1) angetriebenen Generator (5), **dadurch gekennzeichnet, dass** der Regler (10) derart konfiguriert ist, dass er einen Brennstoffverbrauch ($m_{comb}$) der Gasturbine (1) in Abhängigkeit von der Leistung der Gasturbine (1) annähern kann, eine der Gasturbine (1) zugeführte Brennstoffmenge ($m_{fuel}$) bestimmen kann, und einen Leckagestrom ($m_{leak}$) aus Differenz zwischen der zugeführten Brennstoffmenge ($m_{fuel}$) und dem Brennstoffverbrauch ($m_{comb}$) ermitteln kann.

**Claims**

1. Method for detecting a fuel leak during operation of a gas turbine (1) in a fuel distribution system between a fuel regulator valve (9) and at least one burner (12) of the gas turbine (1), **characterised in that** a fuel consumption ($m_{comb}$) of the gas turbine (1) is approximated as a function of the mechanical power of the gas turbine (1), the fuel quantity ($m_{fuel}$) supplied to the fuel distribution system is determined, and the leakage flow ($m_{leak}$) is determined from the difference between the supplied fuel quantity ($m_{fuel}$) and the fuel consumption ($m_{comb}$).

2. Method for detecting a fuel leak according to claim 1, **characterised in that** the fuel consumption ($m_{comb}$) is formed as a function of the gas turbine power, the efficiency of the gas turbine ($\eta$) and the calorific value of the fuel (LHV).

3. Method for detecting a fuel leak according to claim 1, **characterised in that** the fuel consumption ($m_{comb}$) of the gas turbine is calculated from the sum of a fuel mass flow at idle ($m_{idle}$) and a fuel mass flow at load ($m_{load}$), wherein the fuel mass flow at load ($m_{load}$) is formed as a function of the gas turbine power, an efficiency at load ($\eta_{load}$) of the gas turbine and the calorific value of the fuel (LHV).

4. Method for detecting a fuel leak according to any of claims 1 to 3, **characterised in that** the power of the gas turbine (1) at stationary load operation is approximated by the generator power ($P_{geno}$).

5. Method for detecting a fuel leak according to any of claims 1 to 3, **characterised in that** when the gas turbine is run up and on changes to the network frequency, the acceleration ($\omega$) of the shaft train of the gas turbine (1) is measured and the power of the gas turbine is formed from the sum of the generator power ($P_{geno}$) and the power for accelerating the shaft train.

6. Method for detecting a fuel leak according to any of claims 1 to 5, **characterised in that** the temporal increment in the leakage ($m_{leak\_inc}$) is calculated and a leak is assessed as recognised only when the calculated increment exceeds a threshold value.

7. Method for detecting a fuel leak according to claim 6, **characterised in that** the temporal increment in the leakage is calculated according to the equation:

$$m_{leak\_inc} \; = m_{leak} \left( 1 - \tfrac{1}{\tau} \int e^{\frac{-t}{\tau}} \, dt \right) = m_{leak} \; e^{\frac{-t}{\tau}}$$

wherein $\tau$ is the integration duration over time t of the increment calculation.

8. Method for detecting a fuel leak according to any of claims 1 to 5, **characterised in that** a leak is assessed as recognised only when the calculated leakage flow ($m_{leak}$) exceeds a threshold value.

9. Method for detecting a fuel leak according to any of claims 1 to 8, **characterised in that** the supplied fuel quantity ($m_{fuel}$) is calculated as a function of the fuel regulator valve position, the fuel regulator valve characteristic and the fuel pressure at the regulator valve.

10. Method for detecting a fuel leak according to any of claims 1 to 8, **characterised in that** the nominal fuel quantity ($m_{CMD}$) of the regulator is used as a supplied fuel quantity ($m_{fuel}$).

11. Method for detecting a fuel leak according to any of claims 1 to 9, **characterised in that** the detection of the fuel leak is de-activated during a rapid change in operating conditions of the gas turbine (1).

12. Method for detecting a fuel leak according to claim 11, **characterised in that** he detection of the fuel leak is de-activated during load shedding or during an operating mode for frequency support.

13. Method for detecting a fuel leak according to claim 11, **characterised in that** the threshold of the increment in leakage flow ($m_{leak\_inc}$) or the threshold of the leakage flow for detecting a fuel leak by the fuel leakage flow ($m_{leak}$) is de-activated during load shedding or during an operating mode for frequency support.

14. Method for detecting a fuel leak according to any of claims 1 to 13, **characterised in that** a trip valve of the fuel supply is closed as soon as a fuel leak is detected.

15. Power station comprising a gas turbine (1), a regulator (10), a fuel distribution system between a fuel regulator valve (9) and at least one burner (12), and a generator (5) driven by the gas turbine (1), **characterised in that** the regulator (10) is configured such that it can
approximate a fuel consumption ($m_{comb}$) of the gas turbine (1) as a function of the power of the gas turbine (1),
determine a fuel quantity ($m_{fuel}$) supplied to the gas turbine (1), and
determine a leakage flow ($m_{leak}$) from the difference between the supplied fuel quantity ($m_{fuel}$) and the fuel consumption ($m_{comb}$).

**Revendications**

1. Procédé de détection d'une fuite de carburant pendant le fonctionnement d'une turbine à gaz (1) dans un système de distribution de carburant entre une soupape de régulation de carburant (9) et au moins un brûleur (12) de la turbine à gaz (1),
**caractérisé en ce que**
une consommation de carburant ($m_{comb}$) de la turbine à gaz (1) est approximée en fonction de la puissance mécanique de la turbine à gaz (1),
la quantité de carburant (mfuel) introduite dans le système de distribution de carburant est déterminée,
et le débit de fuite ($m_{leak}$) est déterminé à partir de la différence entre la quantité de carburant introduite ($m_{fuel}$) et la consommation de carburant ($m_{comb}$).

2. Procédé de détection d'une fuite de carburant selon la revendication 1, **caractérisé en ce que** la consommation de carburant ($m_{comb}$) est formée en tant que fonction de la puissance de la turbine à gaz, du rendement de la turbine à gaz ($\eta$) et du pouvoir calorifique du carburant (LHV).

3. Procédé de détection d'une fuite de carburant selon la revendication 1, **caractérisé en ce que**
la consommation de carburant ($m_{comb}$) de la turbine à gaz (1) est calculée par la somme d'un débit massique de carburant en marche à vide ($m_{idle}$) et d'un débit massique de carburant de puissance ($m_{load}$), le débit massique de carburant de puissance ($m_{load}$) étant formée en tant que fonction de la puissance de la turbine à gaz, d'un rendement de puissance ($\eta_{load}$) de la turbine à gaz et du pouvoir calorifique du carburant (LHV).

4. Procédé de détection d'une fuite de carburant selon l'une des revendications 1 à 3, **caractérisé en ce que**
la puissance de la turbine à gaz (1) est approximée en fonctionnement de charge stationnaire par la puissance du générateur ($P_{geno}$).

5. Procédé de détection d'une fuite de carburant selon l'une des revendications 1 à 3, **caractérisé en ce que**
lors du démarrage de la turbine à gaz ainsi que lors de modifications de la fréquence du réseau, l'accélération ($\omega$) de la ligne d'arbres de la turbine à gaz (1) est mesurée et
la puissance de la turbine à gaz est formée à partir de la somme de la puissance de générateur ($P_{geno}$) et de la puissance pour l'accélération de la ligne d'arbres.

6. Procédé de détection d'une fuite de carburant selon l'une des revendications 1 à 5, **caractérisé en ce que** l'incrément temporel de la fuite ($m_{leak\_inc}$) est calculé et une fuite est ensuite considérée comme détectée lorsque l'incrément calculé dépasse une valeur seuil.

7. Procédé de détection d'une fuite de carburant selon la revendication 6, **caractérisé en ce que** l'incrément temporel de la fuite est calculée selon l'équation :

$$\dot{m}_{leak\_inc} = \dot{m}_{leak}(1 - \frac{1}{\tau}\int e^{-\frac{t}{\tau}}dt) = \dot{m}_{leak}\, e^{-\frac{t}{\tau}}$$

$\tau$ étant la durée d'intégration sur le temps t du calcul de l'incrément.

8. Procédé de détection d'une fuite de carburant selon l'une des revendications 1 à 5, **caractérisé en ce que**
une fuite n'est considérée comme étant détectée que lorsque le débit de fuite ($m_{leak}$) dépasse une valeur seuil.

9. Procédé de détection d'une fuite de carburant selon l'une des revendications 1 à 8, **caractérisé en ce que**
la quantité de carburant ($m_{fuel}$) introduite est calculé en tant que fonction de la position de la soupape de carburant, de la caractéristique de soupape de régulation de carburant ainsi que de la pression du carburant au niveau de la soupape de régulation.

10. Procédé de détection d'une fuite de carburant selon l'une des revendications 1 à 8, **caractérisé en ce que**
la quantité de carburant de consigne ($m_{CMD}$) du régulateur est utilisée en tant que quantité de carburant introduite ($m_{fuel}$).

**11.** Procédé de détection d'une fuite de carburant selon l'une des revendications 1 à 9, **caractérisé en ce que** la détection de la fuite de carburant est désactivée pendant une modification rapide des conditions de fonctionnement de la turbine à gaz (1).

**12.** Procédé de détection d'une fuite de carburant selon la revendication 11, **caractérisé en ce que** la détection de la fuite de carburant est désactivée pendant un délestage de charge ou pendant un mode de fonctionnement pour le soutien en fréquence.

**13.** Procédé de détection d'une fuite de carburant selon la revendication 11, **caractérisé en ce que** le seuil de l'incrément du débit de fuite ($m_{leak\_inc}$) ou le seuil du débit de fuite est désactivé pour la détection d'une fuite de carburant par le débit de fuite de carburant ($m_{leak}$) pendant un délestage de charge ou pendant un mode de fonctionnement pour le soutien en fréquence.

**14.** Procédé de détection d'une fuite de carburant selon l'une des revendications 1 à 13, **caractérisé en ce qu'**une soupape de déclenchement de l'alimentation en carburant est fermée dès qu'une fuite de carburant est détectée.

**15.** Centrale comprenant une turbine à gaz (1), un régulateur (10), un système de distribution de carburant entre une soupape de régulation de carburant (9) et au moins un brûleur (12) et un générateur (5) entraîné par la turbine à gaz (1), **caractérisée en ce que** le régulateur (10) est conçu de façon à ce qu'il puisse approximer une consommation de carburant ($m_{comb}$) de la turbine à gaz (1) en fonction de la puissance de la turbine à gaz (1), déterminer une quantité de carburant ($m_{fuel}$) introduite dans la turbine à gaz (1) et déterminer un débit de fuite ($m_{leak}$) à partir d'une différence entre la quantité de carburant introduite ($m_{fuel}$) et la consommation en carburant ($m_{comb}$).

**FIG. 1**

**FIG. 2**

$$m_{leak}$$
$$m_{leak\_inc}$$

+

−

22

**FIG. 3**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6761629 B
- EP 0718470 A